# EUROPEAN PATENT APPLICATION

(11) **EP 4 768 213 A1**
(43) Date of publication of application: **01.07.2026**
(21) Application number: 25220315.3
(22) Date of filing: 03.12.2025
(51) Int. Cl.: B29B 7/42, B29B 7/74, B29C 48/00, B29C 48/07, B29C 48/385, B29C 48/88

(54) **PRODUCTION PROCESS WITH CONTINUOUS MIXER OF TPE-O AND TPE-O THUS OBTAINED**

(30) Priority: 05.12.2024 IT 202400027552
(71) Applicant: SERMAG S.r.l., 20124 Milano (IT)
(72) Inventor: ROSMINO, Andrea, I-16146 GENOVA (IT)
(74) Representative: Comoglio, Elena

(57) **Abstract**

The present invention relates to a production process of a thermoplastic elastomer of olefinic nature, comprising the subsequent steps of:
a) simultaneously loading from 40% by weight to 85% by weight of LDPE and/or LLDPE and/or HDPE film in the form of ground flakes and from 15% by weight to 60% by weight of atactic PP copolymer into a buffer (10) equipped with augers (12) for a first mixing of LDPE and/or LLDPE and/or HDPE and atactic PP copolymer, the percentages being expressed with respect to the total weight of the thermoplastic elastomer of olefinic nature;
b) placing the product of the first mixing of LDPE and/or LLDPE and/or HDPE and atactic PP copolymer of step a) into a hot continuous mixer (16) so as to continuously melt and amalgamate the LDPE and/or LLDPE and/or HDPE with the atactic PP copolymer;
c) passing the melted and amalgamated product of step b) through a calender (18), thus obtaining a slab, and subsequently allowing the slab to cool;
d) placing the slab of step c) into a mill (24) in order to grind it, thus obtaining thermoplastic elastomer flakes;
e) sending the thermoplastic elastomer flakes of step d) to a first mixing silo (28) where the flakes are mixed and cooled, preferably to 60°C or to room temperature, thus obtaining a thermoplastic elastomer of olefinic nature.

## Description

### Field of the invention

The present invention relates to a production process of a thermoplastic elastomer (TPE), in particular of olefinic nature (TPE-O), and to a thermoplastic elastomer (TPE), in particular of olefinic nature (TPE-O), thus obtained.

### Prior art

As is known, thermoplastic elastomers combine the workability and recyclability properties typical of thermoplastic materials with many of the physical properties of thermosetting rubbers, such as elasticity, low permanent compression set and high flexibility.

In particular, TPEs can be described as two-phase materials, consisting of a rubbery elastomeric component and a rigid thermoplastic component. The elastomeric phase determines properties similar to those of rubber, such as elasticity, softness, flexibility, low permanent compression set and minimum service temperature, while the thermoplastic phase has properties similar to those of a common thermoplastic polymer, such as hardness, workability, recyclability and maximum service temperature.

EP 3 783 050 A1 and EP 4 269 474 describe production processes of TPE-O.

### Summary of the invention

An objective of the present invention is to provide improved TPE-O compared to those belonging to the known art.

This object is achieved by a production process of a thermoplastic elastomer (TPE), in particular of olefinic nature (TPE-O), and by a thermoplastic elastomer (TPE), in particular of olefinic nature (TPE-O), thus obtained as outlined in the annexed claims, the definitions of which form an integral part of the present description.

### Brief description of the figures

The invention will be better understood from the following detailed description of preferred embodiments thereof, provided by way of example and therefore not limiting with reference to the single figure, in which:

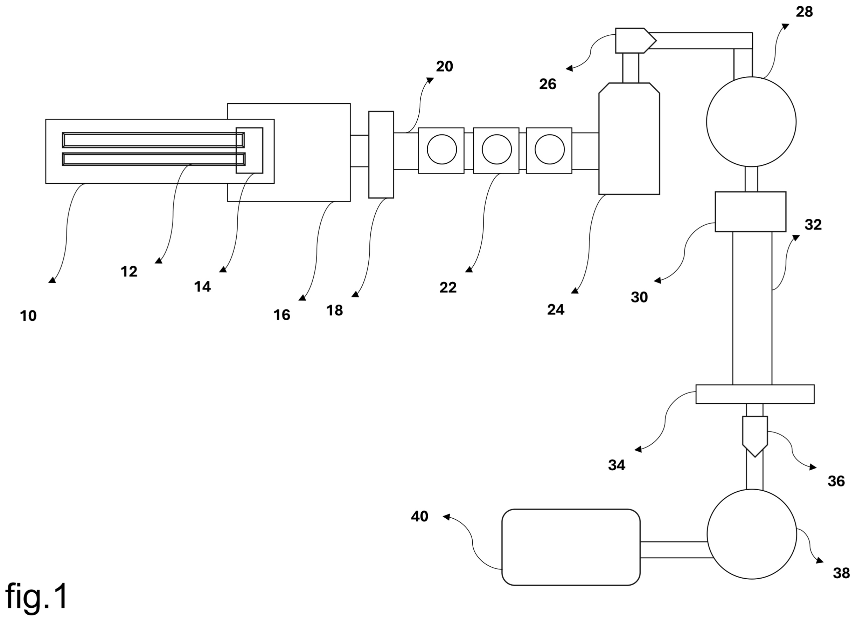

- Figure 1 shows an exemplary scheme of the process according to the present invention.

In the annexed figure, identical or similar elements will be indicated by the same reference numerals.

### Detailed description of the invention

With reference to Figure 1, a first object of the present invention is shown, namely a production process of a thermoplastic elastomer of olefinic nature (TPE-O), comprising the subsequent steps of:
a) simultaneously loading from 40% by weight to 85% by weight of LDPE (low-density polyethylene) and/or LLDPE (linear low-density polyethylene) and/or HDPE (high-density polyethylene) film in the form of ground flakes and from 15% by weight to 60% by weight of atactic PP (polypropylene) copolymer into a buffer 10 equipped with augers 12 for a first mixing of LDPE and/or LLDPE and/or HDPE and atactic PP copolymer;
b) placing the product of the first mixing of LDPE and/or LLDPE and/or HDPE and atactic PP copolymer of step a) into a hot continuous mixer 16 so as to continuously melt and amalgamate the LDPE and/or LLDPE and/or HDPE with the atactic PP copolymer;
c) passing the melted and amalgamated product of step b) through a calender 18, thus obtaining a slab, and subsequently allowing the slab to cool;
d) placing the slab of step c) into a mill 24 in order to grind it, thus obtaining thermoplastic elastomer flakes;
e) sending the thermoplastic elastomer flakes of step d) to a first mixing silo 28 where the flakes are mixed and cooled, preferably to 60°C or to room temperature, thus obtaining a thermoplastic elastomer of olefinic nature.

According to a preferred embodiment of the process according to the present invention, after step e), the process further preferably comprises the subsequent steps of:
f) adding into the first mixing silo 28 of step e) from 0% by weight to 20% by weight of atactic PP copolymer and mixing;
g) sending the mixed material of step f) to a single-screw extruder 32, thus extruding a thermoplastic elastomer;
h) conveying the thermoplastic elastomer of step g) to a second mixing silo 38 in order to homogenise the product and thus obtain a thermoplastic elastomer of olefinic nature, preferably in the form of granules.

Preferably, in step a) the % by weight of LDPE and/or LLDPE and/or HDPE films in the form of ground flakes are preferably 75% by weight and the % by weight of atactic PP copolymer are preferably 25% by weight.

Preferably, in step a) the atactic PP copolymer (which is preferably a high-viscosity atactic PP copolymer) preferably has a viscosity comprised between 500,000 and 1,500,000 cPs, a softening point of about 60°C and the weight percentage of ethylene units is comprised between 25% and 40%, preferably equal to 39%.

Preferably, in step c) cooling of the slab preferably occurs with at least one first fan 22.

Preferably, in step d) the flakes obtained preferably have a maximum size of 12 mm.

Preferably, in step e) the flakes are preferably sent by means of a second fan 26.

Preferably, in step f) the % by weight of atactic PP copolymer are preferably 5% by weight; in step g) the mixed material is preferably sent through a feeder 30; the single-screw extruder 32 preferably has an L/D ratio of 37, preferably operates at a temperature of 180°C and preferably at a rotational speed of 150 rpm; the thermoplastic elastomer is preferably extruded in the form of granules; in step h) the thermoplastic elastomer is preferably conveyed through a third fan 36. Preferably, in step f) the atactic PP copolymer (which is preferably a low-viscosity atactic PP copolymer) preferably has a weight percentage of ethylene units comprised between 30% and 50% and moreover preferably also has a weight percentage of butene units comprised between 10% and 20%. Advantageously, the addition of 5% by weight of low-viscosity atactic PP ensures the same performance of the thermoplastic elastomer but modifies its viscosity, allowing a wider application range for the user.

A second object of the present invention is a thermoplastic elastomer of olefinic nature (TPE-O) obtainable following implementation of the process described above.

A third object of the present invention is a waterproofing membrane consisting of from 50% to 60% by weight of bitumen, from 2% to 20% by weight of said thermoplastic elastomer of olefinic nature (TPE-O) and from 30% to 38% by weight of calcium carbonate.

The process according to the present invention can therefore preferably be summarised as follows:
- volumetric reduction through shredding and grinding of the material;
- premixing of the components in proportion according to the recipe in a buffer;
- mixing in a hot continuous mixer and extrusion into a slab;
- cooling along conveyor belts of the slab obtained from the continuous mixer;
- volumetric reduction through a mill and obtaining the product already definable as thermoplastic elastomer in ground form;
subsequently optionally:
- mixing in a silo with the possibility of adding other components to feed a single-screw extruder;
- extrusion through the single-screw extruder;
- mixing in a silo to obtain a thermoplastic elastomer in granule form.

The process according to the present invention has the advantage of being a process that allows the separate preparation of LDPE and/or LLDPE and/or HDPE and of atactic PP copolymer through shredding and grinding, followed by four mixing steps of the material, of which the hot mixing step occurs continuously before the material is processed in a single-screw extruder. This advantageously allows a considerable saving of energy and labour compared to the known art processes in which the different ingredients of the mixture are prepared together but not as well homogenised with one another as in the case of the process according to the present invention.

Furthermore, advantageously, the hot mixing step takes place in continuous form and not in batch, allowing not only better homogenisation of the LDPE and/or LLDPE and/or HDPE with the molten atactic PP copolymer but also a lower stress on the material compared to that mixed in batch by the densifier, thus improving the characteristics and performance of the hot mixed material.

Advantageously, moreover, the LDPE and/or LLDPE and/or HDPE used in the process according to the present invention is preferably, partially or totally, a pre- or post-consumer recycled material, a by-product and/or a secondary raw material, and may for example derive from packaging film.

Advantageously, compared to previous inventions, the recycled LDPE and/or LLDPE and/or HDPE coming from a washing plant can be used in the process according to the present invention with a residual moisture up to 30% by weight, thus avoiding the need to dry the material coming from the washing step, which moisture is totally removed during the hot continuous mixing step.

In preferred embodiments of implementation of the process according to the present invention, the LDPE and/or LLDPE and/or HDPE, if in the form of pressed bales or rolls and requiring washing, is preferably processed in a plant with double washing and double grinding and conveyed into a mixing silo and, through an auger, loaded into the feeding buffer of said hot continuous mixer.

An object of the present invention is a thermoplastic elastomer consisting of 40% to 85% by weight of LDPE and/or LLDPE and/or HDPE in the form of ground material, granules or flakes, 15% to 60% by weight of high-viscosity atactic PP copolymer and 0% to 20% by weight of low-viscosity atactic PP copolymer. It goes without saying that the sum of the percentages of the ingredients chosen within the above ranges must be equal to 100%.

A further object of the present invention is a thermoplastic elastomer obtainable following implementation of the process described above, which thermoplastic elastomer is particularly usable for the production of bitumen-based waterproofing membranes or as an impact modifier (IZOD) for polypropylene materials.

Advantageously, the thermoplastic elastomer according to the present invention, once added to bitumen, modifies its properties more effectively than if the components had been added separately.

A further object of the present invention is a waterproofing membrane consisting of from 50% to 60% by weight of bitumen, 2% to 20% by weight of the thermoplastic elastomer obtainable with the process according to the present invention and 30% to 38% by weight of calcium carbonate. It goes without saying that the sum of the percentages of the ingredients chosen within the above ranges must be equal to 100%.

It has advantageously been found that, in the bituminous membranes of the invention, the modification of the bitumen resulting from the use of the thermoplastic elastomer obtained allows reaching cold flexibility values (measured according to UNI EN 1109), penetration resistance values (measured according to ASTM D5) and ring and ball values (measured according to ASTM D36) fully satisfactory for usual application requirements.

Compared to the thermoplastic elastomers of the known art, the thermoplastic elastomer that is the object of the present invention is used in a smaller amount while still complying with the above in terms of performance of the bituminous membrane produced.

In particular, the improvements concern:
- lower formulation cost due to a lower use of thermoplastic elastomer;
- energy savings due to the lower amount of energy needed for melting the elastomer during preparation of the mixture;
- reduction in processing time due to the lower amount of elastomer to be melted with the bitumen;
- the same phase inversion between bitumen and thermoplastic elastomer, visible under a fluorescence microscope, despite the reduced percentage of thermoplastic elastomer used for bitumen modification.

It goes without saying that the use of by-products and partially or totally recycled products in the production of the thermoplastic elastomer according to the present invention makes it possible to significantly reduce the cost and the environmental impact of the waterproofing membranes that use it. This is due to their lower cost compared to corresponding virgin raw materials.

With particular reference to Figure 1, a preferred embodiment of the process according to the present invention is now described: through a buffer 10 and a conveyor belt equipped with augers 12, the previously mixed and homogenised material is fed to the inlet 14 of the hot continuous mixer 16. The outgoing material passes through a calender 18 and is cooled by means of first fans 22 mounted on a conveyor belt 20. The material thus reaches a mill 24 which, once shredded, is sent to a first mixing silo 28 by means of a second fan 26. At this point, optionally, the material may pass to the granulation step and may therefore be fed into the feeder 30 of the single-screw extruder 32. From an outlet die 34 of the extruder, the granules are then conveyed by means of the third fan 36 to the second mixing silo 38 to homogenise the obtained product.

### Examples

Some preferred examples of embodiments of the present invention are now provided purely by way of illustration and not limitation.

### EXAMPLE 1: GROUND THERMOPLASTIC ELASTOMER

75% by weight of LDPE film in the form of ground flakes are simultaneously loaded with 25% by weight of atactic PP copolymer with a viscosity comprised between 500,000 and 1,500,000 cPs and a softening point of about 60°C (the percentages being expressed with respect to the total weight of the thermoplastic elastomer), in which the weight percentage of ethylene units is equal to 39% (corresponding to a molar ratio between ethylene and propylene units of 1:0.94), previously reduced into blocks varying from 500 to 1,000 g in a buffer 10.

The buffer 10, equipped with augers 12 which premix (1st mixing) the LDPE and the atactic PP copolymer, sends the material to the feeding inlet 14 of the hot continuous mixer 16.

In the continuous mixer, which has a throughput of 700 kg/h, the atactic polypropylene and the LDPE melt and amalgamate continuously (2nd mixing).

The molten material exits the hot continuous mixer 16 in the form of a slab from its die and is sent to a calender 18 which compresses the slab to reduce its thickness and facilitate its cooling, which occurs on a conveyor belt 20 placed downstream and equipped with first fans 22 in the upper part.

The cooled slab enters a mill 24 which grinds the material, now become a thermoplastic elastomer, reducing it to flakes with a maximum size of 12 mm.

The ground thermoplastic elastomer is sent by means of a second fan 26 to the first mixing silo 28 (3rd mixing) where it cools to room temperature and is then packed in 1000-kg big bags.

### EXAMPLE 2: THERMOPLASTIC ELASTOMER GRANULES

70% by weight of LDPE film in the form of ground flakes are simultaneously sent with 25% by weight of atactic PP copolymer having a viscosity comprised between 500,000 and 1,500,000 cPs and a softening point of about 60°C (the percentages being expressed with respect to the total weight of the thermoplastic elastomer), in which the weight percentage of ethylene units is equal to 39% (corresponding to a molar ratio between ethylene and propylene units of 1:0.94), previously reduced into blocks varying from 500 to 1,000 g to a buffer 10.

The buffer 10, equipped with augers 12 which premix (1st mixing) the LDPE and the atactic PP copolymer, sends the material to the feeding inlet 14 of the hot continuous mixer 16.

In the hot continuous mixer 16, which has a throughput of 700 kg/h, the atactic polypropylene and the LDPE melt and amalgamate continuously (2nd mixing).

The molten material exits the hot continuous mixer 16 in the form of a slab from its die and is sent to a calender 18 which compresses the slab to reduce its thickness and facilitate its cooling, which occurs on a conveyor belt 20 placed downstream and equipped with first fans 22 in the upper part.

The cooled slab enters a mill 24 which grinds the material, now become a thermoplastic elastomer, reducing it to flakes with a maximum size of 12 mm. The ground thermoplastic elastomer is sent by means of a second fan 26 to the first mixing silo 28 (3rd mixing) where it cools to 60°C.

Into the same first mixing silo 28, 5% by weight of atactic PP copolymer with a viscosity comprised between 5,000 and 10,000 cPs (the percentage being expressed with respect to the total weight of the thermoplastic elastomer) is added. The mixed material is sent to the feeder 30 which supplies the single-screw extruder 32 having an L/D ratio of 37 and operating at a temperature of 180°C and a rotational speed of 150 rpm.

From an outlet die 34, 100 parts w/w of thermoplastic elastomer are extruded, whose granules are then conveyed by means of a third fan 36 to the second mixing silo 38 to homogenise (4th mixing) the obtained product and from there to an automatic bagging machine 40 for packaging into 25-kg bags.

## Claims

1. Method for producing a thermoplastic elastomer of olefinic nature, comprising the subsequent steps of:
a) simultaneously loading from 40% by weight to 85% by weight of LDPE and/or LLDPE and/or HDPE film in the form of ground flakes and from 15% by weight to 60% by weight of atactic PP copolymer in a buffer (10) equipped with augers (12) for an initial mixing of LDPE and/or LLDPE and/or HDPE and atactic PP copolymer, the % being expressed with respect to the total weight of the thermoplastic elastomer of olefinic nature;
b) placing the product of the first mixing of LDPE and/or LLDPE and/or HDPE and the atactic PP copolymer of step a) into a hot continuous mixer (16) so that the LDPE and/or LLDPE and/or HDPE with the atactic PP copolymer is continuously melted and mixed;
c) passing the melted and amalgamated product of step b) through a calender (18), thus obtaining a slab, and then allow the slab to cool;
d) feeding the slab of step c) into a mill (24) in order to grind it into thermoplastic elastomer flakes;
e) sending the thermoplastic elastomer flakes of step d) to a first mixing silo (28) wherein the flakes are mixed and cooled, preferably to 60°C or up to room temperature, thus obtaining a thermoplastic elastomer of olefinic nature.

2. Method according to claim 1, wherein the method, after step e), further comprise the subsequent steps of:
f) adding in the first mixing silo (28) of step e) from 0 wt% to 20 wt% of atactic PP copolymer and mixing, the % being expressed with respect to the total weight of the thermoplastic elastomer of olefinic nature;
g) sending the mixed material of step f) to a single-screw extruder (32) thus extruding a thermoplastic elastomer;
h) conveying the thermoplastic elastomer of step g) to a second mixing silo (38) in order to homogenise the product and thus obtain a thermoplastic elastomer of olefinic nature.

3. Method according to claim 1 or 2, wherein in step a) the weight % of LDPE and/or LLDPE and/or HDPE films in form of ground flakes are 75% by weight and the weight % of atactic PP copolymer are 25% by weight.

4. Method according to any one of claims 1 to 3, wherein in step a) the atactic PP copolymer has a viscosity comprised between 500,000 and 1,500,000 cPs, a softening point of about 60°C.

5. Method according to any one of claims 1 to 4, wherein in step c) cooling of the slab occurs with at least one first fan (22).

6. Method according to any one of claims 1 to 5, wherein in step d) the flakes obtained have a maximum size of 12 mm.

7. Method according to any one of claims 1 to 6, wherein in step e) the flakes are sent by means of a second fan (26).

8. Method according to claim 2, wherein in step f) the % by weight of atactic PP copolymer is 5% by weight; in step g) the mixed material is fed through a feeder (30); the single-screw extruder (32) has an L/D ratio of 37, operates at a temperature of 180°C and a rotational speed of 150 rpm; the thermoplastic elastomer is extruded in the form of granules; in step h) the thermoplastic elastomer is conveyed through a third fan (36).

9. A thermoplastic elastomer of olefinic nature obtainable by a process according to any one of claims 1 to 8.

10. A waterproofing membrane comprising from 50% to 60% by weight of bitumen, from 2% to 20% by weight of thermoplastic elastomer of olefinic nature according to claim 9 and from 30% to 38% by weight of calcium carbonate.
